# EUROPEAN PATENT SPECIFICATION

(11) **EP 4 238 677 B1**
(45) Date of publication and mention of the grant of the patent: **26.02.2025**
(21) Application number: 21885643.3
(22) Date of filing: 05.08.2021
(51) Int. Cl.: B23B 31/117, B23B 31/30

(54) **TOOL HOLDER**
WERKZEUGHALTER
PORTE-OUTIL

(30) Priority: 28.10.2020 JP 2020180913
(43) Date of publication of application: 06.09.2023
(73) Proprietor: NT Tool Corporation, Takahama City Aichi 444-1386 (JP)
(72) Inventor: SAITO, Makoto, Takahama-City, Aichi 444-1386 (JP)
(74) Representative: Kramer Barske Schmidtchen Patentanwälte PartG mbB
(86) International application number: PCT/JP2021/029147
(87) International publication number: WO 2022/091521

(56) References cited:
- WO-A1-2012/160664
- DE-A1- 102013 215 258
- JP-A- 2018 183 857
- JP-A- H1 029 106

## Description

### TECHNICAL FIELD

The present invention relates to a tool holder that holds a tool.

### BACKGROUND ART

A tool holder that utilizes fluid pressure can be used as a tool holder that holds a tool. A tool holder that utilizes fluid pressure is disclosed, for example, in Patent Document 1.

The tool holder disclosed in Patent Document 1 is constituted by a body member and a sleeve that is inserted into a body member interior space. The tool holder further has a holding part that holds a tool (specifically, a tool shank part of the tool). The holding part has a pressurizing chamber formed between a body member inner peripheral surface and a sleeve outer peripheral surface, and a thin-walled grip part formed between the pressurizing chamber and a sleeve inner peripheral surface. By increasing the pressure in the pressurizing chamber, the grip part elastically deforms radially inward. As a result, a tool (tool shank part), which has been inserted into a sleeve interior space, is held by the portion of the sleeve inner peripheral surface that corresponds to the grip part.

Patent Document 1: PCT International Publication No. WO 2012-160664.

### SUMMARY OF THE INVENTION

### PROBLEM TO BE SOLVED BY THE INVENTION

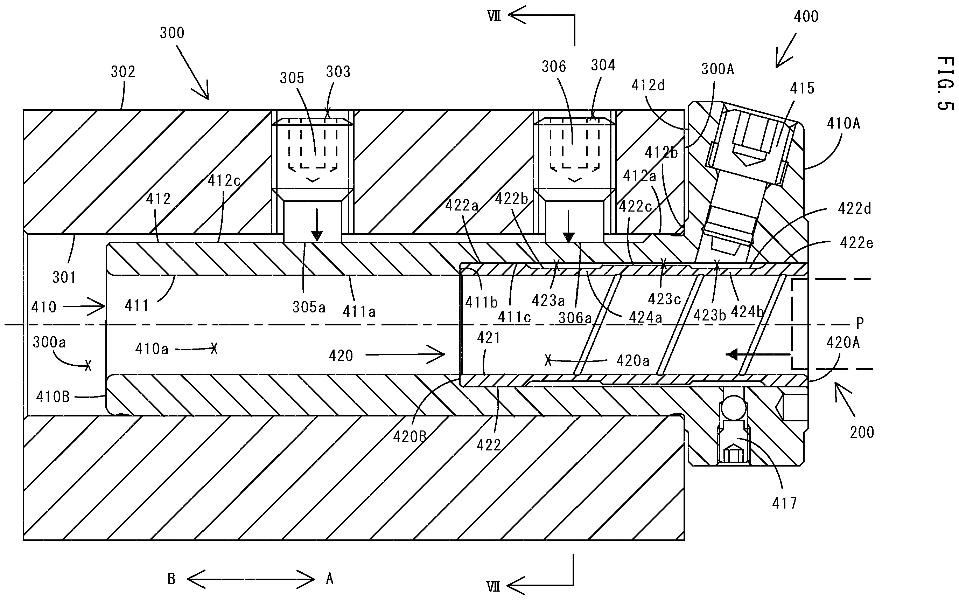

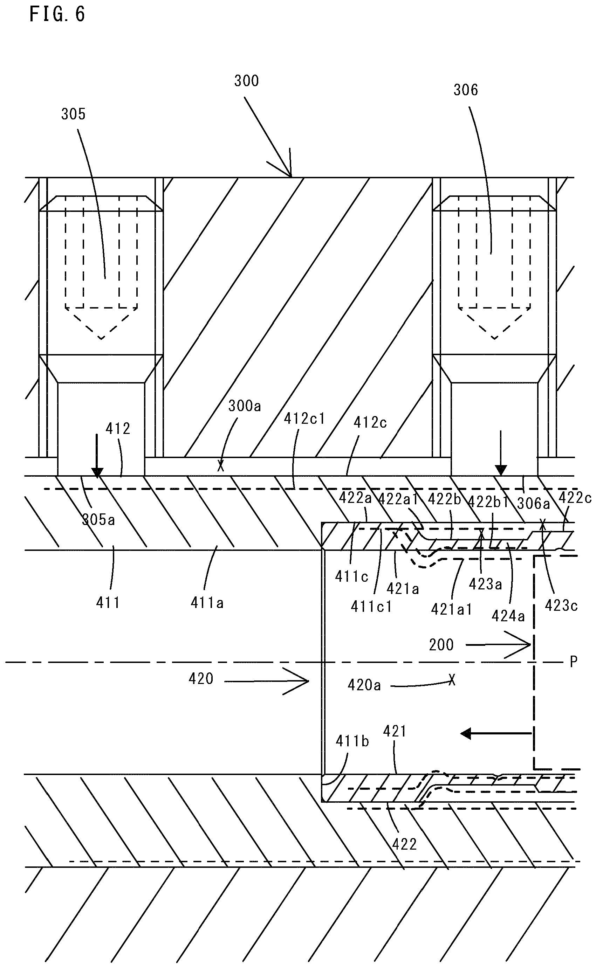

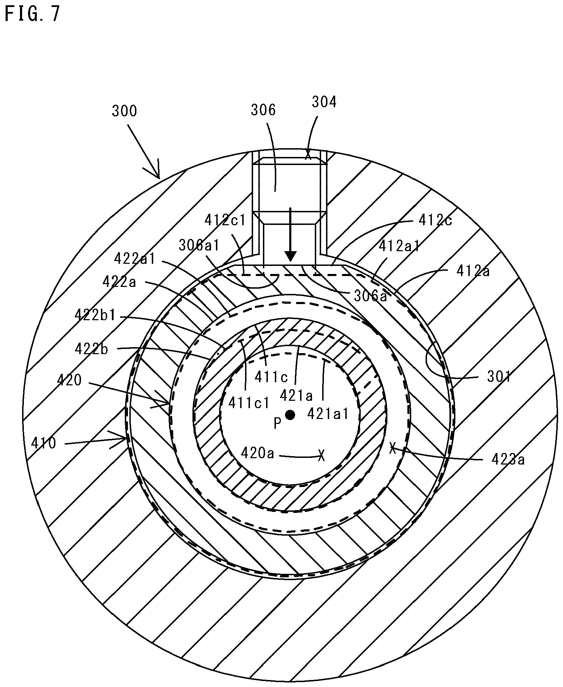

It is envisaged that a tool holder that utilizes fluid pressure may be configured, for example, as shown in FIGS. 5 to 7. FIG. 5 is a sectional view of a tool holder 400 that is inserted into a cutting tool support interior space (tool holder insertion space) 300a of a cutting tool support 300. FIG. 6 is an enlarged view in which an essential part of FIG. 5 has been enlarged, and FIG. 7 is a sectional view taken along line VII-VII in FIG. 5.

The tool holder 400 includes a body member 410 and a sleeve 420. A holding part of the tool holder 400 has pressurizing chambers 423a, 423b and thin-walled grip parts 424a, 424b. The pressurizing chambers 423a, 423b are formed between a sleeve outer peripheral surface 422 (sleeve outer peripheral surface portions 422b, 422d) of the sleeve 420 and a body member inner peripheral surface 411 (body member inner peripheral surface portion 411c) of the body member 410. The grip parts 424a, 424b are formed between the sleeve outer peripheral surface 422 (sleeve outer peripheral surface portions 422b, 422d) and a sleeve inner peripheral surface 421 (sleeve inner peripheral surface portion 421a) of the sleeve 420. A sleeve outer peripheral surface portion 422a, which is formed on a rear end side of the sleeve outer peripheral surface 422, and a sleeve outer peripheral surface portion 422e, which is formed on a front end side of the sleeve outer peripheral surface 422, are brazed to the body member inner peripheral surface 411 (body member inner peripheral surface portion 411c). A tool shank part of a tool 200 is inserted into a tool insertion space formed by a body member interior space 410a and a sleeve interior space 420a. By increasing the pressure in the pressurizing chambers 423a, 423b with the tool shank part inserted into the tool insertion space, the grip parts 424a, 424b are elastically deformed radially inward. As a result, the tool shank part is held by portion(s) of the sleeve inner peripheral surface 421 (sleeve inner peripheral surface portion 421a) that correspond(s) to the grip parts 424a, 424b.

The tool holder 400 is held between fastening screw front end surfaces 305a, 306a of fastening screws 305, 306 and a cutting tool support inner peripheral surface 301.

In recent years, with the use of tools having smaller diameters, a width in a radial direction of a tool holder is formed smaller. When the width in the radial direction of the tool holder becomes smaller, a tool holder inner peripheral surface is liable to be elastically deformed radially inward by a pressing force for holding the tool holder. When the tool holder inner peripheral surface elastically deforms radially inward, insertion of a tool into the tool insertion space, in which the inner diameter of the tool insertion space formed by the tool holder inner peripheral surface is decreased, is liable to become difficult.

For example, in the tool holder 400 shown in FIGS. 5 to 7, if the widths in the radial direction of axially extending portions of the body member 410 and the sleeve 420 become smaller, the pressing force of the fastening screws 305, 306 is liable to be transmitted to the sleeve 420 via the body member 410. In this case, a body member outer peripheral surface portion 412c, the body member inner peripheral surface portion 411c, the sleeve outer peripheral surface portions 422a, 422b and the sleeve inner peripheral surface portion 421a elastically deform radially inward as shown by broken lines in FIGS. 6 and 7 (see broken lines 412c1, 411c1, 422a1, 442b1, 421a1). If the amount of the radially inward elastic deformation of the sleeve inner peripheral surface portion 421a is large, the inner diameter of the sleeve interior space 420a that constitutes the tool insertion space decreases. When the inner diameter of the sleeve interior space 420a decreases, it becomes difficult to insert the tool shank part of the tool 200 into the tool insertion space (sleeve interior space 420a).

JPH10-29106 A discloses a tool holder comprising a body member and a sleeve, wherein the body member has a body member interior space defined with a tapered shape in its front part by a body member inner peripheral surface, the sleeve has a sleeve outer peripheral surface with a tapered outer shape in its front part and the rear side of the sleeve is pulled into the body member interior space and fixed by a screw axially screwed into the body member from its rear side, and a pressurizing chamber is formed between the sleeve outer peripheral surface and the body member inner peripheral surface.

DE 10 2013 215258 A1 discloses a tool holder according to the preamble of claim 1.

The present invention is invented in view of these points, and an object of the present invention is to provide techniques that can curtail a decrease of the inner diameter of the tool insertion space of the tool holder caused by the force that holds the tool holder.

### MEANS FOR SOLVING THE PROBLEM

This object is solved by a tool holder according to claim 1 or an assembly according to claim 2.

The tool holder of the present invention may be formed by one member or a plurality of members. Various methods may be used as the method that holds the tool holder.

The holding part is a portion that holds a tool (specifically, a tool shank part of the tool). A fluid, which is a pressurizing medium, can be filled in the pressurizing chamber. For example, oil is filled. The pressurizing chamber and the grip part are configured such that the grip part is elastically deformable radially inward by increasing the pressure in the pressurizing chamber. For example, the grip part is formed as a thin wall.

The extended chamber communicates with a rear end part of the pressurizing chamber formed on a rear end side of the at least one pressurizing chamber, and extends in the axial direction and in the circumferential direction. In a case in which one pressurizing chamber is formed, the rear end part of the pressurizing chamber corresponds to the "rear end part of the pressurizing chamber formed on a rear end side". The extended chamber is configured such that, in a state in which the tool holder has been inserted into the tool holder insertion space of the tool holder mounting part, radially inward elastic deformation of a portion of the tool holder inner peripheral surface in the radial direction, which corresponds to the grip part formed on the rear end side, by a force applied to the tool holder outer peripheral surface is curtailed. For example, the width in the radial direction and the length in the axial direction of the extended chamber are set such that, in case a normal holding force required to perform an operation using the tool has been applied to the tool holder outer peripheral surface, the inner diameter of the tool insertion space does not become smaller than the outer diameter of the tool shank part of the tool.

In the present invention, a decrease of the inner diameter of the tool insertion space by the force that holds the tool holder received on the tool holder outer peripheral surface can be curtailed.

### EFFECT OF THE INVENTION

In the tool holder of the present invention, a decrease of the inner diameter of the tool insertion space of the tool holder caused by the force that holds the tool holder can be curtailed.

### BRIEF DESCRIPTION OF THE DRAWINGS

FIG. 1 is a sectional view showing a tool holder according to an embodiment of the present invention, in a state mounted in a cutting tool support.
FIG. 2 is a sectional view of the tool holder according to the embodiment of the present invention.
FIG. 3 is an enlarged view in which an essential part of FIG. 1 has been enlarged.
FIG. 4 is a sectional view taken along line IV-IV in FIG. 1.
FIG. 5 is a sectional view showing a previously-existing tool holder in a state mounted in a cutting tool support.
FIG. 6 is an enlarged view in which an essential part of FIG. 5 has been enlarged.
FIG. 7 is a sectional view taken along line VII-VII in FIG. 5.

### MODES FOR CARRYING OUT THE INVENTION

The following detailed description is merely intended to teach a person skilled in the art further details for practicing preferred aspects of the present invention and the technical scope of the present invention is not limited by the description in detailed description and determined based on the description of claims. Combinations of features and steps disclosed within the following detailed description may not be necessary to practice the invention in the broadest sense, and are instead taught merely to particularly describe some representative examples of the present invention which are given in the detailed description with reference to the accompanying drawings.

A representative embodiment of the present invention is now described with reference to the drawings.

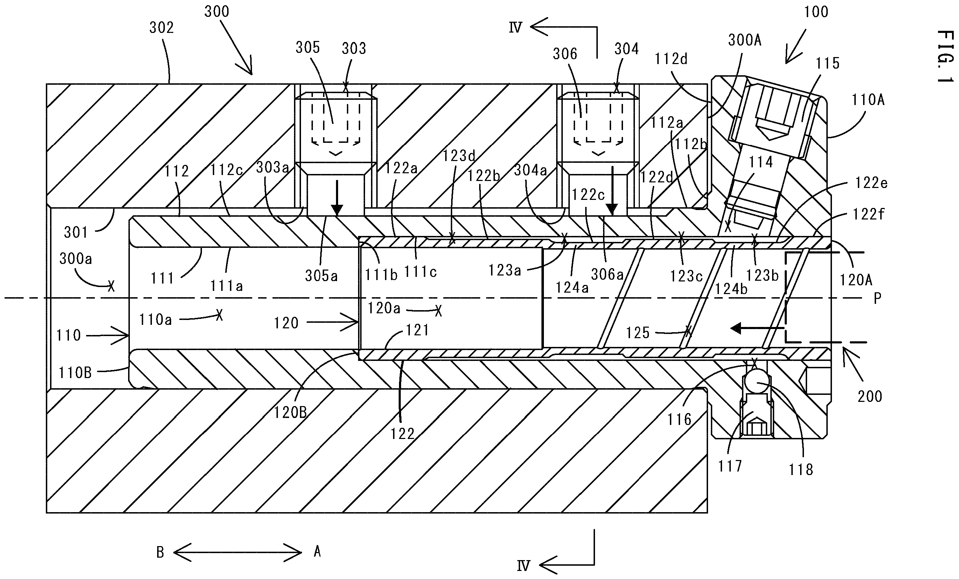

In this specification, the extending direction of a tool holder mounting part (cutting tool support) and the extending direction of a tool holder (body member, sleeve) mounted in the tool holder mounting part (left-right direction in FIGS. 1 to 3, the extension direction of center line P) is defined as an "axial direction". Further, in a cross section orthogonal to the axial direction (the extension direction of the center line P), a direction along a circle around the center line P is defined as a "circumferential direction", and a direction of a line passing through the center line P is defined as a "radial direction". Along the axial direction, the side on which the tool holder is inserted into a tool holder insertion space of the tool holder mounting part and the side on which a tool is inserted into a tool insertion space of the tool holder (the side shown by an arrow A (right side) in FIGS. 1 to 3, 5 and 6) is defined as a "front end side", and the side opposite to the front end side (the side shown by an arrow B (left side) in FIGS. 1 to 3, 5 and 6) is defined as a "rear end side".

A tool holder according to an embodiment of the present invention is described with reference to FIGS. 1 to 4. In this embodiment, a tool holder that is mounted in a cutting tool support is described.

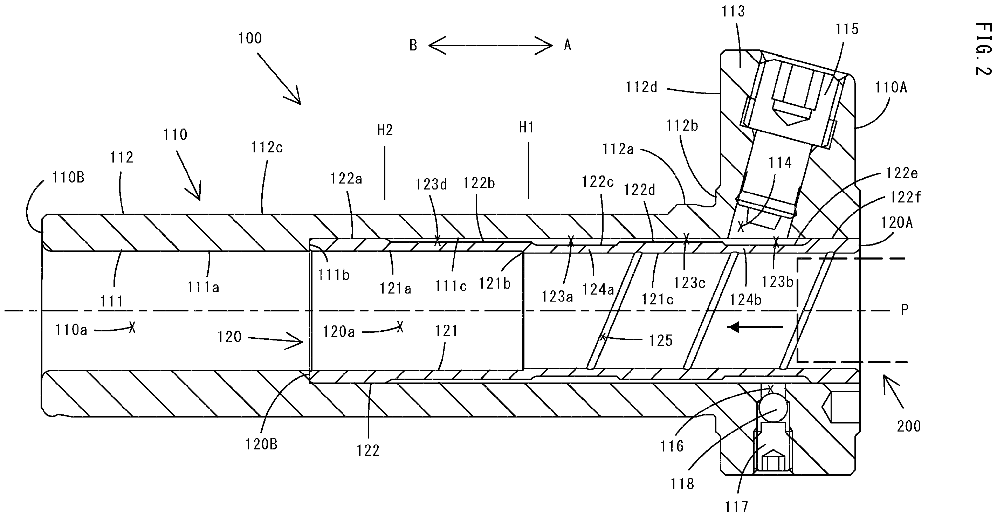

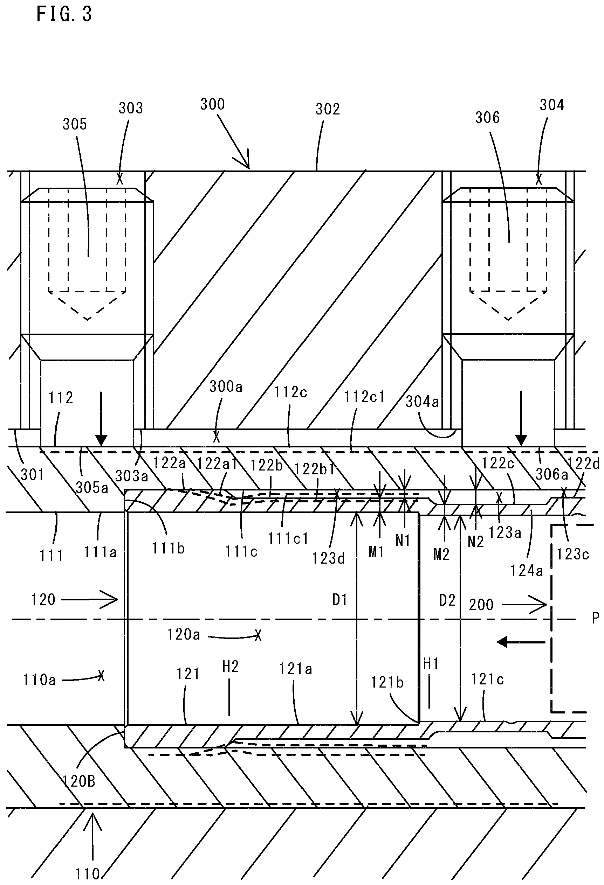

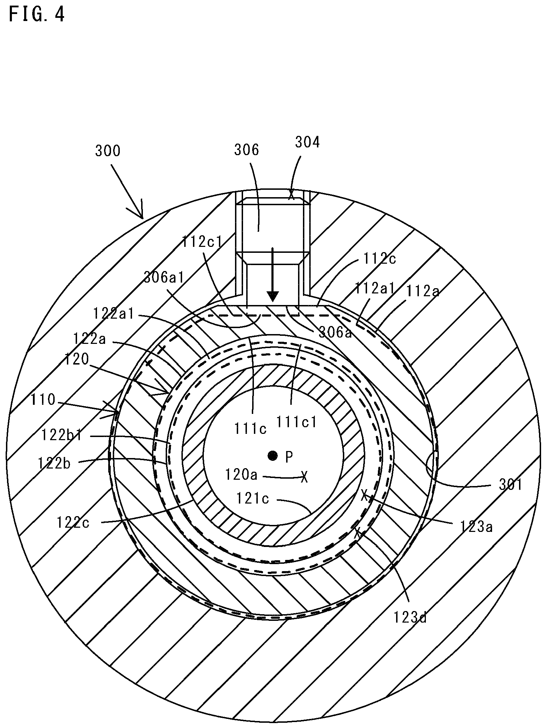

FIG. 1 is a sectional view of a tool holder 100 of this embodiment, in a state mounted in a cutting tool support 300. FIG. 2 is a sectional view of the tool holder 100 of this embodiment. FIG. 3 is an enlarged view in which an essential part of the tool holder 100 in FIG. 1 has been enlarged. FIG. 4 is a sectional view taken along line IV-IV in FIG. 1.

The cutting tool support 300 in which the tool holder 100 of this embodiment is mounted is first described.

The cutting tool support 300 has a cutting tool support inner peripheral surface 301, a cutting tool support outer peripheral surface 302 and a cutting tool support front end surface 300A.

A cutting tool support interior space 300a extending in the axial direction is defined by the cutting tool support inner peripheral surface 301. The cutting tool support interior space 300a has an opening that opens to the cutting tool support front end surface 300A. The tool holder 100 is inserted into the cutting tool support interior space 300a via the opening.

The cutting tool support 300 further has holes 303, 304 extending in the radial direction between the cutting tool support inner peripheral surface 301 and the cutting tool support outer peripheral surface 302. The holes 303 and 304 respectively have openings 303a and 304a that open to the cutting tool support inner peripheral surface 301. Fastening screws 305 and 306 are respectively inserted into the holes 303 and 304 so as to be movable in the radial direction. The fastening screws 305, 306 are capable of projecting radially inward through the openings 303a, 304a more than the cutting tool support inner peripheral surface 301.

When mounting the tool holder 100 in the cutting tool support 300, in the state that the tool holder 100 has been inserted into the cutting tool support interior space 300a, the fastening screws 305, 306 are moved radially inward. The tool holder 100 is then pressed radially inward by fastening screw front end surfaces 305a, 306a abutting on the tool holder 100. Thus, the tool holder 100 is held between the fastening screw front end surfaces 305a, 306a and the cutting tool support inner peripheral surface 301.

In this embodiment, the cutting tool support 300 corresponds to a "tool holder mounting part" of the present invention, the cutting tool support inner peripheral surface 301 corresponds to a "tool holder mounting part inner peripheral surface" of the present invention, the cutting tool support outer peripheral surface 302 corresponds to a "tool holder mounting part outer peripheral surface" of the present invention, and the cutting tool support front end surface 300A corresponds to a "tool holder mounting part front end surface" of the present invention. And the cutting tool support interior space 300a corresponds to a "tool holder mounting part interior space" or a "tool holder insertion space" of the present invention.

Next, the tool holder 100 of this embodiment is described. The tool holder 100 of this embodiment is constituted by a body member 110 and a sleeve 120. The body member 110 and the sleeve 120 are formed of an elastically deformable metal, for example, steel.

The body member 110 is formed in a tubular shape extending in the axial direction.

The body member 110 has a body member inner peripheral surface 111, a body member outer peripheral surface 112, a body member front end surface 110A and a body member rear end surface 110B. A body member interior space 110a extending in the axial direction is defined by the body member inner peripheral surface 111.

The body member inner peripheral surface 111 has body member inner peripheral surface portions 111a to 111c.

The body member inner peripheral surface portions 111a and 111c extend in the axial direction and have a circular shape. The inner diameter of the body member inner peripheral surface portion 111c is larger than the inner diameter of the body member inner peripheral surface portion 111a. The body member inner peripheral surface portion 111b extends in the radial direction. The body member inner peripheral surface portion 111b is a stepped surface connecting the body member inner peripheral surface portions 111a and 111c.

The body member outer peripheral surface 112 has body member outer peripheral surface portions 112a to 112d.

The body member outer peripheral surface portion 112a extends in the axial direction and has a circular shape. The body member outer peripheral surface portion 112c is a notched surface formed by notching the body member outer peripheral surface portion 112a and extends in the axial direction (see FIG. 4). The body member outer peripheral surface portion 112c is a flat surface configured such that the fastening screw front end surfaces 305a, 306a of the fastening screws 305, 306 can abut thereon. The tool holder 100 is mounted in the cutting tool support 300 by pressing the body member outer peripheral surface portion 112c radially inward using the fastening screw front end surfaces 305a, 306a.

The body member outer peripheral surface portion 112b extends in the radial direction. The body member outer peripheral surface portion 112d is a notched surface formed by notching the body member outer peripheral surface portion 112b. A flange 113 extending in the radial direction is formed by the body member outer peripheral surface portions 112b and 112d and the body member front end surface 110A. The insertion position of the tool holder 100 in the cutting tool support interior space 300a is governed by the flange 113.

The flange 113 of the body member 110 has holes 114, 116. Each of the holes 114, 116 has openings that open to the body member inner peripheral surface 111 (body member inner peripheral surface portion 111c) and extend in the radial direction.

A screw (pressurizing screw) 115 for adjusting the pressure in pressurizing chambers 123a, 123b (described below) is disposed within the hole 114. A screw 117 is disposed within the hole 116 via a steel ball 118. The hole 116 is used to charge pressurizing medium into the pressurizing chambers 123a, 123b or to discharge pressurizing medium from the pressurizing chambers 123a, 123b.

The sleeve 120 is formed in a tubular shape extending in the axial direction.

The sleeve 120 has a sleeve inner peripheral surface 121, a sleeve outer peripheral surface 122, a sleeve front end surface 120A and a sleeve rear end surface 120B. A sleeve interior space 120a extending in the axial direction is defined by the sleeve inner peripheral surface 121.

The sleeve inner peripheral surface 121 has sleeve inner peripheral surface portions 121a to 121c. The sleeve inner peripheral surface portions 121a and 121c extend in the axial direction and have a circular shape. The inner diameter D2 of the sleeve inner peripheral surface portion 121c is smaller than the inner diameter D1 of the sleeve inner peripheral surface portion 121a (see FIG. 3). The sleeve inner peripheral surface portion 121b is a stepped surface connecting the sleeve inner peripheral surface portions 121a and 121c. The sleeve inner peripheral surface portion 121b is formed at a boundary portion (rear end portion of a grip part 124a) between sleeve outer peripheral surface portions 122b and 122c (described below). A groove 125, through which a cooling medium for cooling a tool 200 passes, is spirally formed in the sleeve inner peripheral surface portion 121c. The shape of the groove 125 is not limited to a spiral shape.

The sleeve outer peripheral surface 122 has sleeve outer peripheral surface portions 122a to 122f, the cross sections of which are formed as circular shapes.

The sleeve outer peripheral surface portion 122a is formed on a rear end side (on the side shown by the arrow B) of the sleeve outer peripheral surface 122, and the sleeve outer peripheral surface portion 122f is formed on a front end side (on the side shown by the arrow A) of the sleeve outer peripheral surface 122. The sleeve outer peripheral surface portions 122a and 122f have the same outer diameter and extend in the axial direction and the circumferential direction.

The sleeve outer peripheral surface portions 122c and 122e are formed between the sleeve outer peripheral surface portions 122a and 122f and extend in the axial direction and the circumferential direction. The sleeve outer peripheral surface portion 122e is formed on the rear end side relative to the sleeve outer peripheral surface portion 122f, and the sleeve outer peripheral surface portion 122c is formed on the rear end side relative to the sleeve outer peripheral surface portion 122e. The outer diameter [D2+2×M2] (see FIG. 3) of the sleeve outer peripheral surface portions 122c and 122e is set smaller than the outer diameter [D1+2×M1+2×N1] (see FIG. 3) of the sleeve outer peripheral surface portions 122a and 122f. Thus, the sleeve outer peripheral surface portions 122c and 122e are formed as recessed surfaces that are recessed radially inward more than the sleeve outer peripheral surface portions 122a and 122f. It is noted that stepped surfaces are formed on both ends in the axial direction (front end side and rear end side) of the sleeve outer peripheral surface portions 122c and 122e.

The sleeve outer peripheral surface portion 122d is formed between the sleeve outer peripheral surface portions 122c and 122e and extends in the axial direction and in the circumferential direction. The outer diameter of the sleeve outer peripheral surface portion 122d is set such that the pressurizing medium can pass through a communication passage 123c (described below) that communicates the pressurizing chambers 123a and 123b. In this embodiment, the outer diameter of the sleeve outer peripheral surface portion 122d is smaller than the outer diameter of the sleeve outer peripheral surface portions 122a and 122f and is larger than the outer diameter of the sleeve outer peripheral surface portions 122c and 122e.

The sleeve outer peripheral surface portion 122b is formed between the sleeve outer peripheral surface portions 122c and 122a and extends in the axial direction and the circumferential direction. The outer diameter of the sleeve outer peripheral surface portion 122b is set smaller than the outer diameter [D1+2×M1+2×N1] of the sleeve outer peripheral surface portion 122a and larger than the outer diameter [D2+2×M2] of the sleeve outer peripheral surface portion 122c. Thus, the sleeve outer peripheral surface portion 122b is formed radially outward relative to the sleeve outer peripheral surface portion 122c on the rear end side relative to the sleeve outer peripheral surface portion 122c.

Thin-walled grip parts 124a and 124b, which are elastically deformable in the radial direction, are respectively formed between the sleeve outer peripheral surface portions 122c, 122e and the sleeve inner peripheral surface 121 (sleeve inner peripheral surface portion 121c). In FIG. 3, M2 shows the width of the grip parts 124a and 124b in the radial direction.

In this embodiment, the sleeve outer peripheral surface portion 122a corresponds to a "first outer peripheral surface portion" or a "first sleeve outer peripheral surface portion" of the present invention, and the sleeve outer peripheral surface portion 122f corresponds to a "second outer peripheral surface portion" or a "second sleeve outer peripheral surface portion" of the present invention. The sleeve outer peripheral surface portions 122c, 122e correspond to an "at least one third outer peripheral surface portion" or an "at least one third sleeve outer peripheral surface portion" of the present invention. The sleeve outer peripheral surface portion 122c corresponds to a "third outer peripheral surface portion formed on the rear end side" or a "third sleeve outer peripheral surface portion formed on the rear end side" of the present invention, and the sleeve outer peripheral surface portion 122b corresponds to a "fourth outer peripheral surface portion" or a "fourth sleeve outer peripheral surface portion" of the present invention.

The sleeve 120 is inserted into the body member interior space 110a until the sleeve rear end surface 120B abuts on the body member inner peripheral surface portion 111b. The holes 114 and 116 are configured to communicate with either one of the pressurizing chambers (in this embodiment, the pressurizing chamber 123b) when the sleeve rear end surface 120B abuts on the body member inner peripheral surface portion 111b.

The sleeve 120 is then fixed to the body member 110. In this embodiment, the sleeve rear end surface 120B is brazed to the body member inner peripheral surface portion 111b, and the sleeve outer peripheral surface portions 122a and 122f are brazed to the body member inner peripheral surface portion 111c.

Thus, an enclosed region into which the pressurizing medium is charged is formed between the sleeve outer peripheral surface 122 and the body member inner peripheral surface 111. Specifically, the pressurizing chambers 123a and 123b are respectively formed between the sleeve outer peripheral surface portions 122c and 122e and the body member inner peripheral surface portion 111c. The pressurizing chamber 123a is formed on the rear end side relative to the pressurizing chamber 123b.

In FIG. 3, N2 shows the width of the pressurizing chambers 123a and 123b in the radial direction. M2 shows the width of the grip parts 124a and 124b in the radial direction.

Further, the communication passage 123c that communicates with the pressurizing chambers 123a and 123b is formed between the sleeve outer peripheral surface portion 122d and the body member inner peripheral surface portion 111c.

In addition, an extended chamber 123d is formed between the sleeve outer peripheral surface portion 122b and the body member inner peripheral surface portion 111c and extends in the axial direction and in the circumferential direction on the rear end side relative to the pressurizing chamber 123a. The extended chamber 123d communicates with the pressurizing chamber 123a at a radially outer portion of a rear end part of the pressurizing chamber 123a.

The shape (width in the radial direction and length in the axial direction) of the extended chamber 123d is set such that the inner diameter of the tool insertion space (sleeve interior space 120a) does not become smaller than the outer diameter of a tool shank part of the tool 200 when a normal holding force (radially inward pressing force) required to perform an operation using the tool 200 is applied to a tool holder outer peripheral surface (body member outer peripheral surface portion 112c). Particularly, the inner diameter of the sleeve inner peripheral surface portion 121a is set so that it does not become difficult to insert the tool shank part into the sleeve interior space 120a.

In FIG. 3, N1 shows the width of the extended chamber 123d in the radial direction. In addition, M1 shows the width in the radial direction between the sleeve outer peripheral surface portion 122b and the sleeve inner peripheral surface portion 121a.

In this embodiment, a "tool holder" of the present invention is constituted by the body member 110 and the sleeve 120. A "tool holder inner peripheral surface" of the present invention is formed by the body member inner peripheral surface 111 (body member inner peripheral surface portion 111a) and the sleeve inner peripheral surface 121 (sleeve inner peripheral surface portions 121a to 121c). A "tool holder outer peripheral surface" of the present invention is formed by the body member outer peripheral surface 112. A "tool holder interior space" or a "tool insertion space" of the present invention is formed by the body member interior space 110a and the sleeve interior space 120a.

The pressurizing medium is filled into the pressurizing chambers 123a, 123b, the communication passage 123c and the extended chamber 123d. In this embodiment, oil is filled.

In addition, when holding the tool 200 (tool shank part) that has been inserted into the sleeve interior space 120a (tool insertion space), the pressure in the pressurizing chambers 123a, 123b is increased by manipulating the pressurizing screw 115. As a result, the grip parts 124a, 124b elastically deform radially inward, so that the tool 200 (tool shank part) is held by a portion or portions of the sleeve inner peripheral surface 121 (sleeve inner peripheral surface portion 121c) that correspond(s) to the grip parts 124a, 124b.

When inserting the tool 200 into the sleeve interior space 120a (tool insertion space) or withdrawing the tool 200 from the sleeve interior space 120a (tool insertion space), the pressure in the pressurizing chambers 123a, 123b is reduced by manipulating the pressurizing screw 115. As a result, the shape of the grip parts 124a, 124b returns to the normal state.

In the tool holder 400 shown in FIGS. 5 to 7, if the width in the radial direction (width of the body member 410 and the sleeve 420 in the radial direction) is set large, insertion of a tool (tool shank part) into the tool insertion space (sleeve interior space 420a) is not liable to become difficult. In other words, even if a tool holder outer peripheral surface (body member outer peripheral surface portion 412c) is pressed radially inward by the fastening screw front end surfaces 305a, 306a of the fastening screws 305, 306, the pressing force is less liable to be transmitted to a tool holder inner peripheral surface (sleeve inner peripheral surface portions 421a). Thus, the tool holder inner peripheral surface (sleeve inner peripheral surface portion 421a) is not liable to elastically deform radially inward, and insertion of the tool shank part into the sleeve interior space 420a is not liable to become difficult due to a decrease of the inner diameter of the sleeve interior space 420a.

On the other hand, in the tool holder 400 shown in FIGS. 5 to 7, if the width in the radial direction (width of the body member 410 and the sleeve 420 in the radial direction) is set small, insertion of the tool (tool shank part) into the tool insertion space (sleeve interior space 420a) is liable to become difficult. In other words, the pressing force received on the tool holder outer peripheral surface (body member outer peripheral surface portion 412c) is liable to be transmitted to the tool holder inner peripheral surface (sleeve inner peripheral surface portions 421a). In this case, the body member outer peripheral surface portion 412c, the body member inner peripheral surface portion 411c, the sleeve outer peripheral surface portions 422a, 422b and the sleeve inner peripheral surface portion 421a will elastically deform radially inward, as shown in broken lines in FIGS. 6 and 7, by the force applied to the body member outer peripheral surface portion 412c. Accordingly, the inner diameter of the sleeve interior space 420a that forms the tool insertion space is liable to decrease and insertion of the tool shank part into the sleeve interior space 420a is liable to become difficult.

In contrast, in the tool holder 100 of this embodiment, in case the width in the radial direction (width of the body member 110 and the sleeve 120 in the radial direction) is set small, the body member outer peripheral surface 112 (body member outer peripheral surface portion 112c) and the body member inner peripheral surface 111 (body member inner peripheral surface portion 111c) are liable to elastically deform radially inward when the body member outer peripheral surface 112 (body member outer peripheral surface portion 112c) is pressed radially inward by the fastening screw front end surfaces 305a, 306a of the fastening screws 305, 306. For example, the body member outer peripheral surface portion 112c and the body member inner peripheral surface portion 111c are liable to elastically deform from the state shown in solid lines in FIGS. 3 and 4 to the state shown in broken lines (see 112c1, 111c1).

However, in the tool holder 100 of this embodiment, the extended chamber 123d is formed to communicate with the pressurizing chamber 123a formed on the rear end side at the radially outer portion of the rear end part of the pressurizing chamber 123a (at position H1 in FIG. 3) and to extend rearward from the pressurizing chamber 123a in the axial direction and in the circumferential direction. Thus, the grip part 124a is separated from the sleeve outer peripheral surface portion 122a, which is fixed to the body member inner peripheral surface portion 111c, by the length of the extended chamber 123d (sleeve outer peripheral surface portion 122b) in the axial direction. The length of the extended chamber 123d (sleeve outer peripheral surface portion 122b) in the axial direction corresponds to the distance between the position H1 of the rear end part of the outer peripheral surface portion 122c and the position H2 of the front end part of the sleeve outer peripheral surface portion 122a in the axial direction.

The width M1 between the sleeve outer peripheral surface portion 122b and the sleeve inner peripheral surface portion 121a in the radial direction is set larger than the width M2 (of the grip parts 124a and 124b) between the sleeve outer peripheral surface portions 122c, 122e and the sleeve inner peripheral surface portion 121c in the radial direction (M1>M2) (see FIG. 3).

Due to the existence of the extended chamber 123d that communicates with a rear end part of the pressurizing chamber 123a formed on the rear end side and the existence of a portion having a width larger than that of the grip part 124a formed on the rear end side, transmission of force, which is applied to the body member outer peripheral surface 112 (body member outer peripheral surface portion 112c), to the sleeve inner peripheral surface portion 121a is curtailed. Specifically, although the sleeve outer peripheral surface portions 122a, 122b is liable to be elastically deform from the state shown in solid lines in FIGS. 3 and 4 to the state shown in broken lines (122a1, 122b1), radially inward elastic deformation of the sleeve inner peripheral surface portion 121c (particularly, a portion corresponding to the rear end part of the grip part 124a) is curtailed.

In this embodiment, the stepped sleeve inner peripheral surface portion 121b is formed at a portion corresponding to the boundary portion (rear end portion of the grip part 124a) between the sleeve outer peripheral surface portions 122b and 122c. Thus, the sleeve inner peripheral surface portion 121a is formed on the rear end side relative to the sleeve inner peripheral surface portion 121c formed at a portion corresponding to the grip part 124a and has an inner diameter D1 larger than the inner diameter D2 of the sleeve inner peripheral surface portion 121c.

With this configuration, even if the sleeve inner peripheral surface portion 121a has elastically deformed radially inward along with the radially inward elastic deformation of the sleeve outer peripheral surface portion 122b, a decrease of the inner diameter of the sleeve interior space 120a can be curtailed.

Thus, in the tool holder 100 of this embodiment, a decrease of the inner diameter of the sleeve interior space 120a (tool insertion space) due to the force of holding the tool holder 100 (force received on the tool holder outer peripheral surface) can be curtailed, and difficulties with the insertion of the tool 200 (tool shank part) into the sleeve interior space 120a (tool insertion space) can be prevented.

The structures of the body member and the sleeve are not limited to those described in the embodiment.

In this embodiment, although the tool holder is formed by two members (body member and sleeve), it may be formed by one member or three or more members.

In this embodiment, although the holding part is formed by two pressurizing chambers and two grip parts, it may just be formed by at least one pressurizing chamber and at least one grip part. In case the holding part is formed by one pressurizing chamber and one grip part, the one pressurizing chamber and the one grip part correspond respectively to the "pressurizing chamber formed on the rear end side of the at least one pressurizing chamber" and the "grip part formed on the rear end side of the at least one grip part" of the present invention.

In this embodiment, although the sleeve inner peripheral surface portion 121a having a larger inner diameter is formed on the rear end side, the sleeve inner peripheral surface portion 121a may be omitted.

The tool holder mounting part that mounts the tool holder is not limited to the cutting tool support.

The method of holding the tool holder is not limited to pressing the tool holder radially inward with a fastening screw or fastening screws.

The method of adjusting the pressure in the pressurizing chamber is not limited to adjustment using a pressurizing screw.

In this embodiment, although the extended chamber is formed to communicate with the rear end part of the pressurizing chamber formed on the rear end side and extend rearward because the front end part of the tool holder is not liable to elastically deform, in case the front end part of the tool holder is liable to elastically deform, an extended chamber may be formed to communicate with a front end part of the pressurizing chamber formed on the front end side and extend frontward. In this case, an extended chamber can be formed on the front end side in the same manner as the extended chamber formed on the rear end side.

### Description of the Numerals

100, 400 tool holder
110, 410 body member
110A, 410A body member front end surface
110a, 410a body member interior space
111, 411 body member inner peripheral surface
111a to 111c, 411a to 411c body member inner peripheral surface portion
112a to 112d, 412a to 412d body member outer peripheral surface portion
113 flange
114 insertion hole
115, 415 screw (pressurizing screw)
116 insertion hole
117, 417 screw (sealing screw)
118 steel ball
120, 420 sleeve
120A, 420A sleeve front end surface
120B, 420B sleeve rear end surface
120a, 420a sleeve interior space
121, 421 sleeve inner peripheral surface
121a to 121c, 421a sleeve inner peripheral surface portion
122, 422 sleeve outer peripheral surface
122a to 122f, 422a to 422e sleeve outer peripheral surface portion
123a, 123b, 423a, 423b pressurizing chamber
123c, 423c communication passage
123d extended chamber
124a, 124b, 424a, 424b grip part
125 groove
200 tool
300 cutting tool support (tool holder mounting part)
300A cutting tool support front end surface (tool holder mounting part front end surface)
300a cutting tool support interior space (tool holder mounting part interior space)
301 cutting tool support inner peripheral surface (tool holder mounting part inner peripheral surface)
302 cutting tool support outer peripheral surface (tool holder mounting part outer peripheral surface)
303, 304 hole
303a, 304a opening
305, 306 fastening screw (fastening member)
305a, 306a fastening screw front end surface (fastening member front end surface)

## Claims

1. A tool holder (100) which is formed into a tubular shape extending in an axial direction and configured to be held in a state of having been inserted in a tool holder insertion space (300a) of a tool holder mounting part (300),
the tool holder (100) having a tool holder inner peripheral surface, a tool holder outer peripheral surface, a tool insertion space defined by the tool holder inner peripheral surface, and a holding part that holds a tool that has been inserted into the tool insertion space,
wherein the holding part has at least one pressurizing chamber (123a, 123b) extending in the axial direction and in a circumferential direction and at least one grip part (124a, 124b) formed between the at least one pressurizing chamber and the tool holder inner peripheral surface and extending in the axial direction and in the circumferential direction, and
the holding part is configured such that the at least one grip part (124a, 124b) is elastically deformable radially inward by increasing the pressure in the at least one pressurizing chamber (123a, 123b),
the tool holder (100) comprising a body member (110) and a sleeve (120),
the body member (110) is formed into a tubular shape extending in the axial direction and has a body member inner peripheral surface (111), a body member outer peripheral surface (112), a body member front end surface (110A), a body member rear end surface (110B) and a body member interior space (110a) defined by the body member inner peripheral surface,
the sleeve (120) is formed into a tubular shape extending in the axial direction and has a sleeve inner peripheral surface (121), a sleeve outer peripheral surface (122), a sleeve front end surface (120A), a sleeve rear end surface (120B) and a sleeve interior space (120a) defined by the sleeve inner peripheral surface (121),
the sleeve outer peripheral surface (122) has a first sleeve outer peripheral surface portion (122a) and a second sleeve outer peripheral surface portion (122f) that are respectively formed on a rear end side and a front end side and extend in the axial direction and in the circumferential direction, and at least one third sleeve outer peripheral surface portion (122c, 122e) that is formed between the first sleeve outer peripheral surface portion (122a) and the second sleeve outer peripheral surface portion (122f) and extends
in the axial direction and in the circumferential direction,
the first sleeve outer peripheral surface portion (122a) and the second sleeve outer peripheral surface portion (122f) are fixed to the body member inner peripheral surface (111) in a state in which the sleeve (120) has been inserted into the body member interior space (110a), and
the at least one pressurizing chamber (123a, 123b) is formed by the at least one third sleeve outer peripheral surface portion (122c, 122e) of the sleeve outer peripheral surface (122) and the body member inner peripheral surface (111), the at least one grip part (124a, 124b) is formed by the at least one third sleeve outer peripheral surface portion (122c, 122e) of the sleeve outer peripheral surface (122) and the sleeve inner peripheral surface (121),
wherein
the body member outer peripheral surface (112) has body member outer peripheral surface portions (112a to 112d) of which a first body member outer peripheral surface portion (112a) extends in the axial direction and has a circular shape and a second body member outer peripheral surface portion (112c) is a notched surface formed by notching the first body member outer peripheral surface portion (112a) and extends in the axial direction, **characterized in that**
the sleeve outer peripheral surface (122) has a fourth sleeve outer peripheral surface portion (122b) that is formed between the first sleeve outer peripheral surface portion (122a) and the second sleeve outer peripheral surface portion (122f) and extends in the axial direction and in the circumferential direction,
the fourth sleeve outer peripheral surface portion (122b) is connected to a rear end part of the third sleeve outer peripheral surface portion (122c) formed on the rear end side of the at least one third sleeve outer peripheral surface portion (122c, 122e), and to a front end part of the first sleeve outer peripheral surface portion(122a), and is recessed radially inward more than the first sleeve outer peripheral surface portion (122a) and the second sleeve outer peripheral surface portion (122f),
the at least one third sleeve outer peripheral surface portion (122c, 122e) is recessed radially inward more than the fourth sleeve outer peripheral surface portion (122b),
the sleeve inner peripheral surface (121) has first to third sleeve inner peripheral surface portions (121a to 121c) extending in the axial direction and having a circular shape, the inner diameter (D2) of the second sleeve inner peripheral surface portion (121c) is smaller than the inner diameter (D1) of the first sleeve inner peripheral surface portion (121a), the third sleeve inner peripheral surface portion (121b) is a stepped surface connecting the first and second sleeve inner peripheral surface portions (121a and 121c), and the third sleeve inner peripheral surface portion (121b) is formed at a boundary portion between the fourth sleeve outer peripheral surface portion (122b) and the third sleeve outer peripheral surface portion (122c) formed on the rear end side,
the tool holder inner peripheral surface that defines the tool insertion space is formed by the body member inner peripheral surface (111) and the sleeve inner peripheral surface (121), the tool holder outer peripheral surface is formed by the body member outer peripheral surface (112),
an extended chamber (123d) which communicates with a rear end part of the pressurizing chamber (123a) formed on a rear end side of the at least one pressurizing chamber (123a , 123b) and extends in the axial direction and in the circumferential direction is formed by the fourth sleeve outer peripheral surface portion (122b) of the sleeve outer peripheral surface (122) and the body member inner peripheral surface (111), and
the extended chamber (123d) is configured such that a width (N1) in a radial direction of the extended chamber (123d) is smaller than a width (N2) in the radial direction of the pressurizing chamber (123a) formed on the rear end side, and a width (M1) in the radial direction between the extended chamber (123d) and the tool holder inner peripheral surface (121) is larger than a width (M2) in the radial direction between the pressurizing chamber (123a) formed on the rear end side and the tool holder inner peripheral surface (121), and
the tool holder (100) is configured such that, in a state of having been inserted into the tool holder insertion space (300a) of the tool holder mounting part (300), radially inward elastic deformation of a portion of the tool holder inner peripheral surface (111, 121), which corresponds to the grip part (124a) formed on the rear end side, by a force received on the tool holder outer peripheral surface (112) is curtailed.

2. An assembly of a tool holder (100) as defined in claim 1 and a tool holder mounting part (300), wherein
the tool holder mounting part (300) has holes (303, 304) extending in the radial direction between a tool holder mounting part inner peripheral surface (301) and a tool holder mounting part outer peripheral surface (302), the holes (303, 304) each have an opening (303a, 304a) that opens to the tool holder mounting part inner peripheral surface (301), and fastening screws (305, 306) are respectively inserted into the holes (303, 304) so as to be movable in the radial direction and capable of projecting radially inward through the openings (303a, 304a) beyond the tool holder mounting part inner peripheral surface (301),
the body member outer peripheral surface portion (112c) is a flat surface configured such that fastening screw front end surfaces (305a, 306a) of the fastening screws (305, 306) can abut thereon, and
the tool holder (100) is held in the tool holder insertion space (300a) of the tool holder mounting part (300) by the second body member outer peripheral surface portion (112c) being pressed radially inward by the fastening screws (305, 306).

## Patentansprüche

1. Werkzeughalter (100), der in einer Röhrenform, die sich in einer axialen Richtung erstreckt, ausgebildet ist und dazu konfiguriert ist, in einem in einen Werkzeughaltereinsatzraum (300a) eines Werkzeughaltermontageteils (300) eingesetzten Zustand gehalten zu sein, welcher Werkzeughalter (100) eine innere Werkzeughalterumfangsoberfläche, eine äußere Werkzeughalterumfangsoberfläche, einen Werkzeugeinsatzraum, der durch die innere Werkzeughalterumfangsoberfläche definiert ist, und ein Halterungsteil, das ein Werkzeug, das in den Werkzeugeinsatzraum eingesetzt wurde, hält, aufweist,
bei dem das Halterungsteil mindestens eine Druckkammer (123a, 123b), die sich in der axialen Richtung und einer Umfangsrichtung erstreckt, und mindestens ein Griffteil (124a, 124b), das zwischen der mindestens einen Druckkammer und der inneren Werkzeughalterumfangsoberfläche ausgebildet ist und sich in der axialen Richtung und der Umfangsrichtung erstreckt, aufweist und
das Halterungsteil so konfiguriert ist, dass das mindestens eine Griffteil (124a, 124b) durch ein Erhöhen des Drucks in der mindestens einen Druckkammer (123a, 123b) elastisch radial nach innen verformbar ist,
welcher Werkzeughalter (100) ein Körperbauteil (110) und eine Buchse (120) aufweist,
das Körperbauteil (110) ist in einer Röhrenform, die sich in der axialen Richtung erstreckt, ausgebildet und weist eine innere Körperbauteilumfangsoberfläche (111), eine äußere Körperbauteilumfangsoberfläche (112), eine vordere Körperbauteilendoberfläche (110A), eine hintere Körperbauteilendoberfläche (110B) und einen Körperbauteilinnenraum (110a), der durch die innere Körperbauteilumfangsoberfläche definiert ist, auf,
die Buchse (120) ist in einer Röhrenform, die sich in der axialen Richtung erstreckt, ausgebildet und weist eine innere Buchsenumfangsoberfläche (121), eine äußere Buchsenumfangsoberfläche (122), eine vordere Buchsenendoberfläche (120A), eine hintere Buchsenendoberfläche (120B) und einen Buchseninnenraum (120a), der durch die innere Buchsenumfangsoberfläche (121) definiert ist, auf,
welche äußere Buchsenumfangsoberfläche (122) einen ersten äußeren Buchsenumfangsoberflächenabschnitt (122a) und einen zweiten äußeren Buchsenumfangsoberflächenabschnitt (122f), die entsprechend auf einer hinteren Endseite und einer vorderen Endseite ausgebildet sind und sich in der axialen Richtung und in der Umfangsrichtung erstrecken, und mindestens einen dritten äußeren Buchsenumfangsoberflächenabschnitt (122c, 122e), der zwischen dem ersten äußeren Buchsenumfangsoberflächenabschnitt (122a) und dem zweiten äußeren Buchsenumfangsoberflächenabschnitt (122f) ausgebildet ist und sich in der axialen Richtung und der Umfangsrichtung erstreckt, aufweist,
welcher erste äußere Buchsenumfangsoberflächenabschnitt (122a) und welcher zweite äußere Buchsenumfangsoberflächenabschnitt (122f) an der inneren Körperbauteilumfangsoberfläche (111) in einem Zustand fixiert sind, in dem die Buchse (120) in den Körperbauteilinnenraum (110a) eingesetzt ist, und
die mindestens eine Druckkammer (123a, 123b) ist durch den mindestens einen dritten äußeren Buchsenumfangsoberflächenabschnitt (122c, 122e) der äußeren Buchsenumfangsoberfläche (122) und die innere Körperbauteilumfangsoberfläche (111) ausgebildet, das mindestens eine Griffteil (124a, 124b) ist durch den mindestens einen dritten äußeren Buchsenumfangsoberflächenabschnitt (122c, 122e) der äußeren Buchsenumfangsoberfläche (122) und die innere Buchsenumfangsoberfläche (121) ausgebildet,
bei dem die äußere Körperbauteilumfangsoberfläche (112) äußere Körperbauteilumfangsoberflächenabschnitte (112a bis 112d) aufweist, von denen sich ein erster äußerer Körperbauteilumfangsoberflächenabschnitt (112a) in der axialen Richtung erstreckt und eine kreisförmige Form aufweist und ein zweiter äußerer Körperbauteilumfangsoberflächenabschnitt (112c) eine eingekerbte Oberfläche ist, die durch ein Einkerben des ersten äußeren Körperbauteilumfangsoberflächenabschnitts (112a) ausgebildet ist und sich in der axialen Richtung erstreckt, **dadurch gekennzeichnet, dass**
die äußere Buchsenumfangsoberfläche (122) einen vierten äußeren Buchsenumfangsoberflächenabschnitt (122b) aufweist, der zwischen dem ersten äußeren Buchsenumfangsoberflächenabschnitt (122a) und dem zweiten äußeren Buchsenumfangsoberflächenabschnitt (122f) ausgebildet ist und sich in der axialen Richtung und in der Umfangsrichtung erstreckt, welcher vierte äußere Buchsenumfangsoberflächenabschnitt (122b) mit einem hinteren Endteil des dritten äußeren Buchsenumfangsoberflächenabschnitts (122c), das auf der hinteren Endseite des mindestens einen dritten äußeren Buchsenumfangsoberflächenabschnitts (122c, 122e) ausgebildet ist, und mit einem vorderen Endteil des ersten äußeren Buchsenumfangsoberflächenabschnitts (122a) verbunden ist und radial nach innen mehr als der erste äußere Buchsenumfangsoberflächenabschnitt (122a) und der zweite äußere Buchsenumfangsoberflächenabschnitt (122f) ausgenommen ist,
der mindestens eine dritte äußere Buchsenumfangsoberflächenabschnitt (122c, 122e) radial nach innen weiter als der vierte äußere Buchsenumfangsoberflächenabschnitt (122b) ausgenommen ist,
die innere Buchsenumfangsoberfläche (121) erste bis dritte innere Buchsenumfangsoberflächenabschnitte (121a bis 121c) aufweist, die sich in der axialen Richtung erstrecken und eine kreisförmige Form aufweisen, bei denen der Innendurchmesser (D2) des zweiten inneren Buchsenumfangsoberflächenabschnitt (121c) kleiner ist als der Innendurchmesser (D1) des ersten inneren Buchsenumfangsoberflächenabschnitt (121a), der dritte innere Buchsenumfangsoberflächenabschnitt (121b) eine gestufte Oberfläche ist, die den ersten und den zweiten inneren Buchsenumfangsoberflächenabschnitt (121a und 121c) verbindet, und der dritte innere Buchsenumfangsoberflächenabschnitt (121b) ist an einem Grenzabschnitt zwischen dem vierten äußeren Buchsenumfangsoberflächenabschnitt (122b) und dem dritten äußeren Buchsenumfangsoberflächenabschnitt (122c) ausgebildet, der auf der hinteren Endseite ausgebildet ist,
die innere Werkzeughalterumfangsoberfläche, die den Werkzeugeinsatzraum definiert, durch die innere Körperbauteilumfangsoberfläche (111) und die innere Buchsenumfangsoberfläche (121) ausgebildet ist, die äußere Werkzeughalterumfangsoberfläche durch die äußere Körperbauteilumfangsoberfläche (112) ausgebildet ist,
eine Erstreckungskammer (123d), die mit einem hinteren Endteil der Druckkammer (123), das auf einer hinteren Endseite der mindestens einen Druckkammer (123a, 123b) ausgebildet ist, kommuniziert und sich in der axialen Richtung und in der Umfangsrichtung erstreckt, durch den vierten äußeren Buchsenumfangsoberflächenabschnitt (122b) der äußeren Buchsenumfangsoberfläche (122) und die innere Körperbauteilumfangsoberfläche (111) ausgebildet ist, und
die Erstreckungskammer (123d) so konfiguriert ist, dass eine Breite (N1) der Erstreckungskammer (123d) in einer radialen Richtung der Erstreckungskammer (123d) kleiner ist als eine Breite (N2) in der radialen Richtung der Druckkammer (123a), die auf der hinteren Endseite ausgebildet ist, und eine Breite (M1) in der radialen Richtung zwischen der Erstreckungskammer (123d) und der inneren Werkzeughalterumfangsoberfläche (121) größer ist als eine Breite (M2) in der radialen Richtung zwischen der Druckkammer (123a), die auf der hinteren Endseite ausgebildet ist, und der inneren Werkzeughalterumfangsoberfläche (121), und
der Werkzeughalter (100) so konfiguriert ist, dass in einem Zustand, in dem der Werkzeughalter (100) in den Werkzeughaltereinsatzraum (300a) des Werkzeughaltermontageteils (300) eingesetzt ist, eine radial nach innen erfolgende elastische Verformung eines Abschnitts der inneren Werkzeughalterumfangsoberfläche (111, 121), die dem Griffteil (124a), das auf der hinteren Endseite ausgebildet ist, entspricht, durch eine Kraft, die auf die äußere Werkzeughalterumfangsoberfläche (112) wirkt, unterdrückt ist.

2. Aufbau aus einem Werkzeughalter (100) nach Anspruch 1 und einem Werkzeughaltermontageteil (300), bei dem
das Werkzeughaltermontageteil (300) Löcher (303, 304), die sich in der radialen Richtung erstrecken, zwischen einer inneren Werkzeughaltermontageteilumfangsoberfläche (301) und einer äußeren Werkzeughaltermontageteilumfangsoberfläche (302) aufweist, welche Löcher (303, 304) jeweils eine Öffnung (303a, 304a) aufweisen, die sich zu der inneren Werkzeughaltermontageteilumfangsoberfläche (301) öffnet, und Befestigungsschrauben (305, 306) entsprechend so in die Löcher (303, 304) eingesetzt sind, dass sie in der radialen Richtung bewegbar sind und radial nach innen durch die Öffnungen (303, 304) über die innere Werkzeughaltermontageteilumfangsoberfläche (301) vorstehen können,
der äußere Körperbauteilumfangsoberflächenabschnitt (112c) eine flache Oberfläche ist, die so konfiguriert ist, dass vordere Befestigungsschraubenendoberflächen (305a, 306a) der Befestigungsschrauben (305, 306) daran anstoßen können, und
der Werkzeughalter (100) in dem Werkzeughaltereinsatzraum (300a) des Werkzeughaltermontageteils (300) dadurch gehalten wird, dass der zweite äußere Körperbauteilumfangsoberflächenabschnitt (112c) durch die Befestigungsschrauben (305, 306) radial nach innen gedrückt wird.

## Revendications

1. Porte-outil (100) qui est formé en une forme tubulaire s'étendant dans une direction axiale et configuré pour être maintenu dans un état où il a été inséré dans un espace d'insertion de porte-outil (300a) d'une pièce de montage de porte-outil (300),
le porte-outil (100) ayant une surface périphérique interne de porte-outil, une surface périphérique externe de porte-outil, un espace d'insertion d'outil défini par la surface périphérique interne de porte-outil, et une partie de maintien qui maintient un outil qui a été inséré dans l'espace d'insertion d'outil,
dans lequel la partie de maintien a au moins une chambre de pressurisation (123a, 123b) s'étendant dans la direction axiale et dans une direction circonférentielle et au moins une pièce de préhension (124a, 124b) formée entre ladite au moins une chambre de pressurisation et la surface périphérique interne de porte-outil et s'étendant dans la direction axiale et dans la direction circonférentielle, et
la partie de maintien est configurée de telle sorte que ladite au moins une pièce de préhension (124a, 124b) est élastiquement déformable radialement vers l'intérieur en augmentant la pression dans ladite au moins une chambre de pressurisation (123a, 123b), le porte-outil (100) comprenant un élément de corps (110) et un manchon (120),
l'élément de corps (110) est formé en une forme tubulaire s'étendant dans la direction axiale et a une surface périphérique interne d'élément de corps (111), une surface périphérique externe d'élément de corps (112), une surface d'extrémité avant d'élément de corps (110A), une surface d'extrémité arrière d'élément de corps (110B) et un espace intérieur d'élément de corps (110a) défini par la surface périphérique interne d'élément de corps,
le manchon (120) est formé en une forme tubulaire s'étendant dans la direction axiale et a une surface périphérique interne de manchon (121), une surface périphérique externe de manchon (122), une surface d'extrémité avant de manchon (120A), une surface d'extrémité arrière de manchon (120B) et un espace intérieur de manchon (120a) défini par la surface périphérique interne de manchon (121),
la surface périphérique externe de manchon (122) a une première partie de surface périphérique externe de manchon (122a) et une deuxième partie de surface périphérique externe de manchon (122f) qui sont respectivement formées sur un côté de l'extrémité arrière et un côté de l'extrémité avant et s'étendent dans la direction axiale et dans la direction circonférentielle, et au moins une troisième partie de surface périphérique externe de manchon (122c, 122e) qui est formée entre la première partie de surface périphérique externe de manchon (122a) et la deuxième partie de surface périphérique externe de manchon (122f) et s'étend dans la direction axiale et dans la direction circonférentielle,
la première partie de surface périphérique externe de manchon (122a) et la deuxième partie de surface périphérique externe de manchon (122f) sont fixées à la surface périphérique interne d'élément de corps (111) dans un état dans lequel le manchon (120) a été inséré dans l'espace intérieur d'élément de corps (110a), et
ladite au moins une chambre de pressurisation (123a, 123b) est formée par ladite au moins une troisième partie de surface périphérique externe de manchon (122c, 122e) de la surface périphérique externe de manchon (122) et la surface périphérique interne d'élément de corps (111), et ladite au moins une pièce de préhension (124a, 124b) est formée par ladite au moins une troisième partie de surface périphérique externe de manchon (122c, 122e) de la surface périphérique externe de manchon (122) et la surface périphérique interne de manchon (121),
dans lequel
la surface périphérique externe d'élément de corps (112) a des parties de surface périphérique externe d'élément de corps (112a à 112d) dont une première partie de surface périphérique externe d'élément de corps (112a) s'étend dans la direction axiale et a une forme circulaire et une deuxième partie de surface périphérique externe d'élément de corps (112c) est une surface entaillée formée par l'entaille de la première partie de surface périphérique externe d'élément de corps (112a) et s'étend dans la direction axiale, **caractérisé en ce que**
la surface périphérique externe de manchon (122) a une quatrième partie de surface périphérique externe de manchon (122b) qui est formée entre la première partie de surface périphérique externe de manchon (122a) et la deuxième partie de surface périphérique externe de manchon (122f) et qui s'étend dans la direction axiale et dans la direction circonférentielle,
la quatrième partie de surface périphérique externe de manchon (122b) est reliée à une partie de l'extrémité arrière de la troisième partie de surface périphérique externe de manchon (122c) formée sur le côté de l'extrémité arrière de ladite au moins une troisième partie de surface périphérique externe de manchon (122c, 122e), et à une partie de l'extrémité avant de la première partie de surface périphérique externe de manchon (122a), et est plus en retrait radialement vers l'intérieur que la première partie de surface périphérique externe de manchon (122a) et la deuxième partie de surface périphérique externe de manchon (122f),
ladite au moins une troisième partie de surface périphérique externe de manchon (122c, 122e) est évidée radialement vers l'intérieur que la quatrième partie de surface périphérique externe de manchon (122b),
la surface périphérique interne de manchon (121) a des première au troisième parties de surface périphérique interne de manchon (121a à 121c) s'étendant dans la direction axiale et ayant une forme circulaire, le diamètre interne (D2) de la deuxième partie de surface périphérique interne de manchon (121c) est plus petit que le diamètre interne (D1) de la première partie de surface périphérique interne de manchon (121a), la troisième partie de surface périphérique interne de manchon (121b) est une surface en escalier reliant les première et deuxième parties de surface périphérique interne de manchon (121a et 121c), et la troisième partie de surface périphérique interne de manchon (121b) est formée à une partie de limite entre la quatrième partie de surface périphérique externe de manchon (122b) et la troisième partie de surface périphérique externe de manchon (122c) formée sur le côté de l'extrémité arrière,
la surface périphérique interne de porte-outil qui définit l'espace d'insertion d'outil est formée par la surface périphérique interne d'élément de corps (111) et la surface périphérique interne de manchon (121), la surface périphérique externe de porte-outil est formée par la surface périphérique externe d'élément de corps (112),
une chambre étendue (123d) qui communique avec une partie d'extrémité arrière de la chambre de pressurisation (123a) formée sur un côté de l'extrémité arrière de ladite au moins une chambre de pressurisation (123a, 123b) et s'étend dans la direction axiale et dans la direction circonférentielle est formée par la quatrième partie de surface périphérique externe de manchon (122b) de la surface périphérique externe de manchon (122) et de la surface périphérique interne d'élément de corps (111), et
la chambre étendue (123d) est configurée de telle sorte qu'une largeur (N1) dans une direction radiale de la chambre étendue (123d) est inférieure à une largeur (N2) dans la direction radiale de la chambre de pressurisation (123a) formée sur le côté de l'extrémité arrière, et qu'une largeur (M1) dans la direction radiale entre la chambre étendue (123d) et la surface périphérique interne de porte-outil (121) est supérieure à une largeur (M2) dans la direction radiale entre la chambre de pressurisation (123a) formée sur le côté de l'extrémité arrière et la surface périphérique interne de porte-outil (121), et
le porte-outil (100) est configuré de telle sorte que, lorsqu'il a été inséré dans l'espace d'insertion de porte-outil (300a) de la pièce de montage de porte-outil (300), la déformation élastique radiale vers l'intérieur d'une partie de la surface périphérique interne de porte-outil (111, 121), qui correspond à la pièce de préhension (124a) formée du côté de l'extrémité arrière, par une force reçue sur la surface périphérique externe de porte-outil (112), est limitée.

2. Assemblage d'un porte-outil (100) tel que défini dans la revendication 1 et d'une pièce de montage de porte-outil (300), dans lequel
la pièce de montage de porte-outil (300) a des trous (303, 304) s'étendant dans la direction radiale entre une surface périphérique interne de pièce de montage de porte-outil (301) et une surface périphérique externe de pièce de montage de porte-outil (302), les trous (303, 304) ont chacun une ouverture (303a, 304a) qui débouche sur la surface périphérique interne de pièce de montage de porte-outil (301), et des vis de fixation (305, 306) sont respectivement insérés dans les trous (303, 304) de manière à être mobiles dans la direction radiale et à pouvoir faire saillie radialement vers l'intérieur à travers les ouvertures (303a, 304a) au-delà de la surface périphérique interne (301) de pièce de montage de porte-outil,
la partie de surface périphérique externe d'élément de corps (112c) est une surface plate configurée de telle sorte que les surfaces d'extrémité avant de vis de fixation (305a, 306a) des vis de fixation (305, 306) puissent s'y appuyer, et
le porte-outil (100) est maintenu dans l'espace d'insertion de porte-outil (300a) de la pièce de montage de porte-outil (300) par la deuxième partie de surface périphérique externe d'élément de corps (112c) qui est pressée radialement vers l'intérieur par les vis de fixation (305, 306).
